# EUROPÄISCHE PATENTSCHRIFT

(11) **EP 0 993 358 B1**
(45) Veröffentlichungstag und Bekanntmachung des Hinweises auf die Patenterteilung: **17.07.2002**
(21) Anmeldenummer: 99922117.9
(22) Anmeldetag: 21.04.1999
(51) Int. Cl.: B29C 37/00, B29C 59/02, B29C 33/46, G11B 7/26

(54) **EINRICHTUNG UND VERFAHREN ZUR TRENNUNG EINES GEFORMTEN SUBSTRATES VON EINEM PRÄGEWERKZEUG**
DEVICE AND METHOD FOR SEPARATING A MOULDED SUBSTRATE FROM A STAMPING TOOL
PROCEDE ET DISPOSITIF PERMETTANT DE SEPARER UN SUBSTRAT MODELE D'UN OUTIL D'ESTAMPAGE

(30) Priorität: 04.05.1998 DE 19819761
(43) Veröffentlichungstag der Anmeldung: 19.04.2000
(73) Patentinhaber: JENOPTIK Aktiengesellschaft, 07743 Jena (DE)
(72) Erfinder: SPRINGER, Alf, D-07751 Milda (DE); REUTHER, Frank, D-07407 Rudolstadt (DE); MÜLLER, Lutz, D-07747 Jena (DE)
(74) Vertreter: Oehmke, Volker, Dipl.-Math.
(86) Internationale Anmeldenummer: EP9902676
(87) Internationale Veröffentlichungsnummer: WO9956928

(56) Entgegenhaltungen:
- EP-A- 0 664 168
- DE-C- 19 648 844
- PATENT ABSTRACTS OF JAPAN vol. 095, no. 001, 28. Februar 1995 (1995-02-28) & JP 06 293965 A (SHIBAURA ENG WORKS CO LTD), 21. Oktober 1994 (1994-10-21)

## Beschreibung

Die Erfindung betrifft eine Einrichtung zur Trennung eines geformiten Substrates von einem Prägewerkzeug gemäß dem Oberbegriff des Patentanspruchs 1 sowie ein Verfahren gemäß dem Oberbegriff des Patentanspruchs 7.

Der nächstliegende Stand der Technik ist aus der EP 0 664 168 A1 bekannt.

Unter dem Namen LIGA-Technik (Lithographie mit Synchrotronstrahlung. Galvanoformung, Abformtechnik mit Kunststoffen) ist ein Verfahren zur Herstellung mikrosystemtechnischer Bauelemente bekannt. Durch Eindrücken eines Abformwerkzeuges in ein formbares Material, wie z. B. einer Thermoplastschicht, werden vorzugsweise unter Vakuum und bei einer Temperatur oberhalb der Erweichungstemperatur des formbaren Materials dreidimensionale Strukturen mit Strukturhöhen im Bereich weniger Nanometer bis hin zu einigen hundert Mikrometern erzeugt.

Eine dafür geeignete Einrichtung nach der DE 196 48 844 C1 enthält eine Kammer mit einem gestellfesten und einem verstellbaren Kammerteil. Die Einstellung der Druck- und Temperaturverhältnisse innerhalb der Kammer ist mit vorgegebenen Werten einer auf das feststehende Kammerteil wirkenden Kraft verbunden.
Nachdem der Prozeß der Warmabformung abgeschlossen ist, haftet das auf einem Substratträger am feststehenden Kammerteil aufgebrachte formbare Material durch große Aspektverhältnisse, Schrumpfungsprozesse und technologisch bedingte Oberflächenrauheiten des Abformwerkzeuges in dessen Strukturen und muß in geeigneter Weise abgetrennt werden.

Diesem Zweck des Entformens dient eine Vorrichtung gemäß der DE 195 09 452 A1, mit der Biegespannungen bei der Entformung gering gehalten und geometrische Einschränkungen bei der zur Verfügung stehenden Oberfläche des Abformwerkzeuges vermieden werden sollen.
Ein Formeinsatz, dessen Mikrostruktur auf ein Formteil übertragen wird, ist in seinem Randbereich von einem Auswerfer umgeben, der zur Entformung des Formteiles von dem Formeinsatz zwischen einer Ruheposition und einer Arbeitsposition verfahrbar ist. An der dem Formteil abgewandten Seite des Auswerfers ist ein Raum vorgesehen, der mit einem unter Druck stehendem Fluid füllbar ist. Das Fluid soll in der Arbeitsposition des Auswerfers randseitig unter das Formteil greifen, einen Druck zwischen dem Formeinsatz und dem zu entformenden Formteil aufbauen und dadurch die Entformung unterstützen. Außerdem soll der Auswerfer mit Hilfe der Druckkraft des Fluids in seine Arbeitsposition verfahren werden.
Eine derartige Arbeitsweise, bei welcher der für die Doppelfunktion des Fluids vorgesehene Raum als Druckkammer ausgebildet sein muß und zum Verfahren des Auswerfers wie ein Pneumatikzylinder zu arbeiten hat, ist bei der offenbarten Lösung jedoch mit erheblichen Unsicherheiten verbunden. Das liegt darin begründet, daß der Formeinsatz und der angrenzende Auswerfer mit der darüberliegenden Schicht des Formteiles als Wandelemente des Raumes vorgesehen sind. Die undefinierte Haftung des Formteiles auf dem Auswerfer kann zu Undichtheiten führen und die Funktion der Vorrichtung erheblich beeinträchtigen.
Undefiniert in seiner Steuerung ist auch der Prozeß der Entformung, sowohl durch die angewendete Kraftsteuerung als auch die Beendigung durch mechanische Anschläge. Das Verhalten des Formteiles bleibt weitgehend unkontrollierbar.

Von Nachteil ist außerdem die randseitige Anpassung des Auswerfers an den Formeinsatz, da durch eine derartige direkte Schnittstelle an ein kostenintensives Bauelement das Risiko der Beschädigung oder einer anderen nachteiligen Beeinflussung des Werkzeuges unnötigerweise erhöht wird.

Bekannt ist es nach der EP 0 664 168 A1, die eine Vorrichtung zum Tiefziehen eines Blechrohlings auf einer Formmatrize aus elastischem Material beinhaltet, auch, mit einem Substrathalter den zu formenden Rohling außerhalb der Formbereiches zu fixieren.

Aufgabe der Erfindung ist es, die Entformung funktionssicher zu gestalten und eine Beschädigung kostenintensiver Bauelemente weitgehend auszuschließen.

Gemäß der Erfindung wird die Aufgabe durch eine Einrichtung zur Trennung eines geformten Substrates von einem Prägewerkzeug mit einem Paar gegeneinander verstellbarer Kammerteile einer verschließbaren Kammer, von denen ein erstes Kammerteil als Träger des Prägewerkzeuges und ein zweites Kammerteil als Träger des formbaren Substrates dienen und mit einem Substrathalter, der das Substrat außerhalb des Prägebereiches fixiert, dadurch gelöst, dass das Substrat zum Ablösen von dem Prägewerkzeug durch den Substrathalter bei Vergrößerung des Abstandes der beiden Kammerteile an seinem Träger fixiert ist.

Des Weiteren ist der Substrathalter parallel zur Richtung der Verstellung der Kammerteile verschiebbar und schließt mit dem Träger des Prägewerkzeuges eine erste Druckkammer ein. Vorteilhafterweise ist die erste Druckkammer als ringförmige Nut in den Träger des Prägewerkzeuges eingearbeitet, die der Substrathalter abschließt
Die Druckkammer enthält den Substrathalter als beweglichen Teil und arbeitet mit hoher Sicherheit als Pneumatikzylinder, bei dem der Substrathalter durch Vergrößerung des Kammervolumens auf das Substrat zu bewegt wird.

Vorteilhaft wirkt sich auch aus, wenn der Substrathalter einen Werkzeughalter am Träger des Prägewerkzeuges umschließt, der das Prägewerkzeug auf seiner Umfangsfläche umgreift. Dadurch wird eine direkte Schnittstelle von dem kostenintensiven Prägewerkzeug zu einem beweglichen Teil vermieden und das Risiko einer Beschädigung erheblich gemindert.

Weiterhin begrenzt der Substrathalter durch seine Auflage auf dem Substrat gemeinsam mit dem Werkzeughalter eine zweite Druckkammer, in die mindestens ein Kanal für Druckluft durch den Werkzeughalter zur Unterstützung der Ablösung des Substrates von dem Prägewerkzeug beim Öffnen der Kammer geführt ist.

Der Träger des Prägewerkzeuges enthält Zufuhrkanäle für Druckluft, von denen ein erster mit der ersten Druckkammer und ein zweiter mit dem Kanal in dem Werkzeughalter verbunden ist.

Die obenstehende Aufgabe wird ferner erfindungsgemäß durch ein Verfahren zur Trennung eines geformten Substrates von einem Prägewerkzeug innerhalb einer geschlossenen Kammer, die ein Paar gegeneinander verstellbarer Kammerteile enthält, von denen ein erstes Kammerteil als Träger des Prägewerkzeuges und ein zweites Kammerteil als Träger des formbaren Substrates dienen, wobei das Substrat in einem außerhalb eines Prägebereiches liegenden Randbereich an seinem Träger fixiert wird, wobei der Abstand der beiden Kammerteile vergrößert wird, während dessen das Substrat an seinem Träger fixiert, bleibt, gelöst.

Es ist von Vorteil, wenn ein anfänglicher Ablösebereich, der bei der Öffnung der Kammer im fixierten Randbereich entsteht, durch Druckluft und weitere Öffnung der Kammer bis zur vollständigen Trennung des Substrates von dem Prägewerkzeug vergrößert wird.

Das Verhalten des Formteiles bleibt weitgehend kontrollierbar. Das Substrat wird nicht abgestriffen bzw. ausgeworfen sondern zunächst festgehalten und anschließend abgezogen.
Für die durch Druckluft ausführbaren Funktionsabläufe sind voneinander separierte Druckkammern vorgesehen, in denen jederzeit stabile Druckzustände vorherrschen. In vorteilhafter Weise kann die Steuerung des Ablösevorganges jederzeit sicher so ausgeführt werden, daß das formbare Material gleichmäßig, ohne Rückfederungseffekte und Strukturabrisse aus dem Werkzeug herausgelöst wird. Die Vermeidung manueller Nacharbeiten und die Automatisierbarkeit der separaten, der Abformung nachgeordneten reproduzierbaren Prozeßschritte führen zu einer Produktivitätssteigerung.

Die Erfindung soll nachstehend anhand der schematischen Zeichnung näher erläutert werden. Es zeigen:
- Fig. 1: eine Einrichtung zur Abformung mikrosystemtechnischer Strukturen
- Fig. 2: eine in der Einrichtung nach Fig. 1 enthaltene Entformeinrichtung

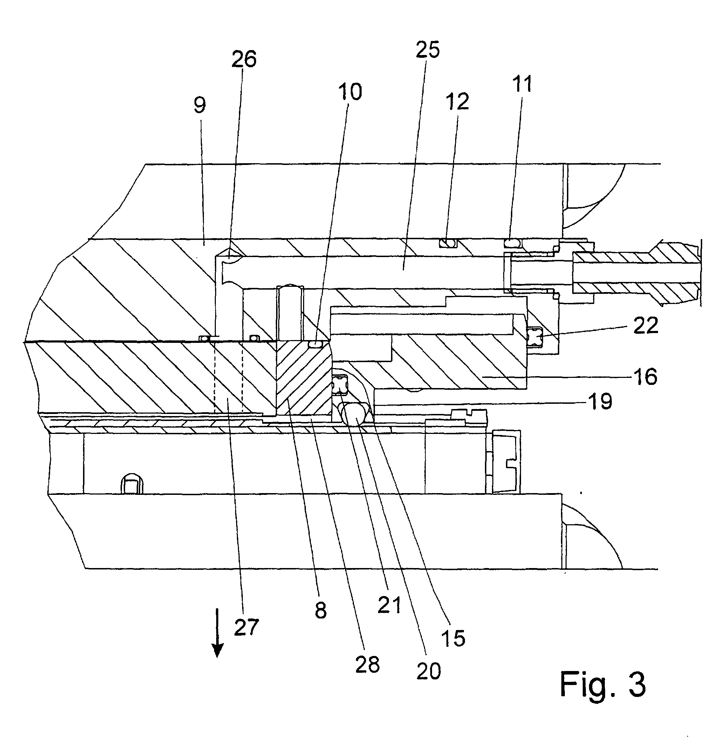

- Fig. 3: einen Ausschnitt aus der Entformeinrichtung nach erfolgter Entformung

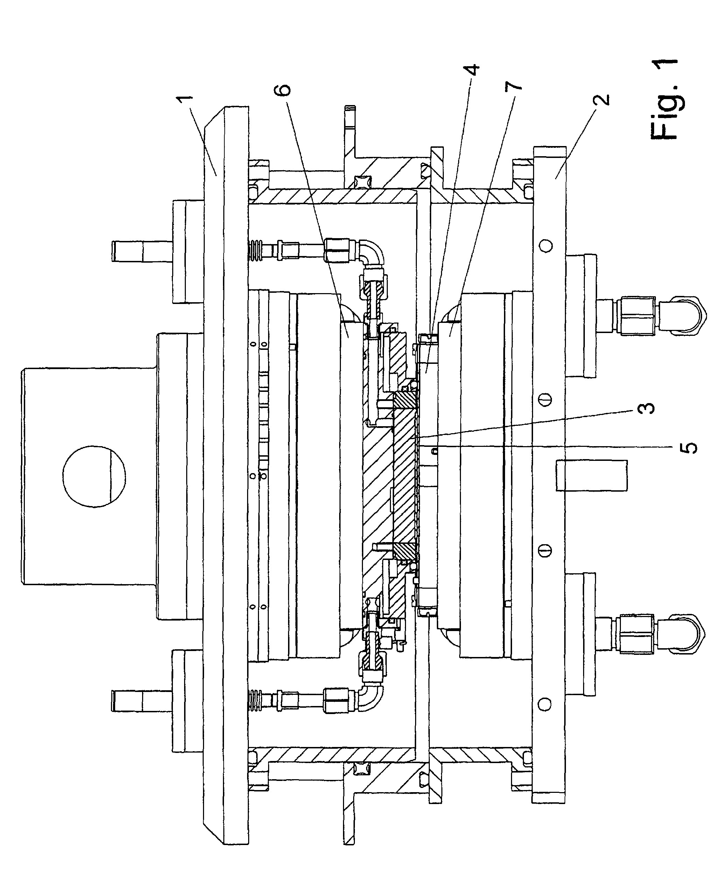

Die unter Vakuum arbeitende Abformeinrichtung gemäß Fig. 1 ist als verschließbare Kammer aufgebaut und besteht aus gegeneinander verstellbaren Kammerteilen 1, 2, von denen das eine Kammerteil 1 Träger für ein Prägewerkzeug 3 und das andere Kammerteil 2 auf einem Substratträger 4 ein formbares Substrat 5 enthält. Temperierplatten 6, 7 sorgen für eine Temperatureinstellung, die für das Heißprägen erforderlich ist.

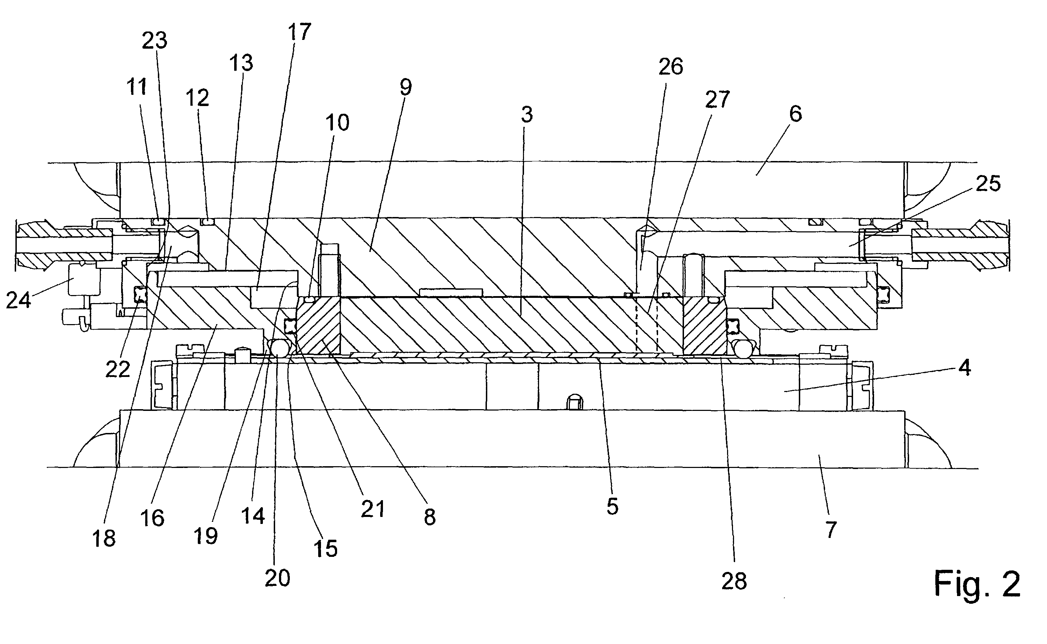

Nach Fig. 2 deutlicher entnehmbar, enthält der Träger für das Prägewerkzeug 3 einen zylindrischen Werkzeughalter 8, der an einer Grundplatte 9 durch einen Dichtring 10 abgedichtet befestigt ist und das Prägewerkzeug 3 auf seiner Umfangsfläche umgreift. In die, über Dichtringe 11, 12 an der Temperierplatte 6 abgedichtet befestigte Grundplatte 9 ist eine ringförmige Nut 13 eingearbeitet, deren innere Zylinderfläche 14 sich durch die zylindrische Mantelfläche 15 des Werkzeughalters 8 verlängert. Ein parallel zur Richtung der Verstellung der Kammerteile verschiebbarer ringförmiger Substrathalter 16 bildet mit der Nut 13 und der verlängernden Mantelfläche 15 eine erste Druckkammer 17, in die ein erster Zufuhrkanal 18 für Druckluft durch die Grundplatte 9 geführt ist. Der Substrathalter 16, der stirnseitig einen als Niederhalter dienenden Vorsprung 19 mit einer umlaufenden Dichtung 20 aufweist, liegt mit Dichtmitteln 21, 22 an der äußeren Zylinderfläche 15 des Werkzeughalters 8 bzw. an der äußeren Zylinderfläche 23 der Nut 13 an. Dadurch ist gewährleistet, daß der in axialer Richtung bewegbare Substrathalter 16 wie der Kolben eines Pneumatikzylinders arbeiten kann. Der Bewegungsbereich wird in der einen Richtung durch die Grundplatte 9 und in der anderen Richtung durch nicht dargestellte Anschläge begrenzt. Rückstellfedern 24 dienen dazu, den Substrathalter 16 wieder in seine Ruhestellung zu bringen, nachdem die Druckluftzufuhr beendet wurde. In Ruhestellung ist der Substrathalter 16 soweit angehoben, daß der Vorsprung 19 mit der umlaufenden Dichtung 20 die strukturierte Fläche des Prägewerkzeuges 3 nicht überragt, was jedoch in keiner der Figuren ersichtlich ist.
Ein zweiter Zufuhrkanal 25 für Druckluft in der Grundplatte 9 mündet in einem vertikal verlaufenden Kanal 26 und verlängert sich durch einen weiteren Kanal 27 in dem Werkzeughalter 8 bis zu einem stirnseitigem Austritt. Beide Zufuhrkanäle 18, 25 werden von einer nicht dargestellten Preumatiksteuerung der Abformeinrichtung versorgt und können getrennt angesteuert werden.

Der Prägezyklus, bei dem die Struktur der Oberfläche des Prägewerkzeuges 3 z. B. nach der DE 196 48 844 C1 auf das Substrat übertragen wird, beginnt mit dem Schließen der Abformeinrichtung. Zu diesem Zeitpunkt befindet sich der Substrathalter 16 in der Ruhestellung. Nachdem die erforderlichen atmosphärischen Bedingungen (Vakuum) über die Pneumatiksteuerung und die Solltemperatur über die Temperierplatten 6, 7 eingestellt sind, werden die beiden Kammerteile 1, 2 kraft- und weggesteuert zueinander vertikal positioniert, bis es zu einem Kontakt des Prägewerkzeuges 3 mit dem formbaren Substrat 5 kommt. Danach wird das Substrat 5 durch einen kraftgesteuerten Positioniervorgang entsprechend eingestellter Prozeßparameter in das Prägewerkzeug 3 gedrückt. Anschließend wird die Kammer über die Temperierplatten 6, 7 bis auf eine prozeßabhängige Entformtemperatur abgekühlt. Dabei bleibt der durch den Prägevorgang hergestellte Oberflächenkontakt zwischen dem Prägewerkzeug 3 und dem Substrat 5 kraftgeregelt aufrechterhalten. Ist die Entformtemperatur erreicht, werden in der Kammer wieder normale atmosphärische Druckverhältnisse hergestellt. Nachdem der Druckausgleich erfolgt ist, wird der Zufuhrkanal 18 über die Pneumatikeinheit mit Druckluft beaufschlagt, wobei unter Druckluft ein für den Prozeß geeignetes, unter Druck stehendes gasförmiges Medium zu verstehen ist.
Durch den sich in der ersten Druckkammer 17 aufbauenden Druck wird der Substrathalter 16 solange in Richtung des Kammerteiles 2 verschoben, bis der Vorsprung 19 mit der umlaufenden Dichtung 20 auf der Oberfläche des Substrates 5 aufliegt. Da die Bewegung durch die Auflage gestoppt wird, wird das Substrat 5 mit einer dem Luftdruck proportionalen Kraft gegen den Substratträger 4 gepreßt. Der ringförmige Vorsprung 19 schließt durch seine abgedichtete Auflage auf dem Substrat 5 eine zweite Druckkammer 28 ein, die außerdem durch das Substrat 5, den Werkzeughalter 8 und das Prägewerkzeug 3 begrenzt ist und in die der Kanal 27 mündet.
Nachdem die Druckkammer 28 über die Kanäle 25, 26, 27 mit Druckluft befüllt ist, wird der Abstand beider Kammerteile 1, 2 kontinuierlich vergrößert. Das Substrat 5, das durch den Substrathalter 16 aufgrund des in der ersten Druckkammer 17 vorherrschenden Druckes ständig an den Substratträger 4 gepreßt wird, wird vom Rand her von dem Prägewerkzeug 3 abgezogen. Die in der zweiten Druckkammer 28 vorhandene Druckluft strömt sofort in den entstehenden Spalt und unterstützt die Ablösung des Substrates 5 mit einer dem Luftdruck proportionalen Entformkraft. Die mit der fortschreitenden Ablösung verbundene Vergrößerung der Angriffsfläche der Luft führt zu einer weiteren Erhöhung der Entformkraft. Der Ablöseprozeß erfolgt gleichmäßig auf dem Umfang des Substrates 5 verteilt und ohne Rückfederungseffekte.
Die kontinuierliche Bewegung der Kammerteile 1, 2 wird mit einer definierten, gleichmäßigen Geschwindigkeit für eine vorgegebene Strecke durchgeführt. Nach Abschluß dieser Bewegung wird die Druckluftzufuhr zu den Druckkammern 17 und 28 unterbrochen. Die Rückstellfedern 24 beförden den Substrathalter 16 wieder in seine Ruhestellung.
Mit der vollständigen Ablösung des Subastrates 5 von dem Prägewerkzeug 3 kann die Kammer geöffnet werden.

## Patentansprüche

1. Einrichtung zur Trennung eines geformten Substrates (5) von einem Prägewerkzeug (3) mit einem Paar gegeneinander verstellbarer Kammerteile (1, 2) einer verschließbaren Kammer, von denen ein erstes Kammerteil (1) als Träger des Prägewerkzeuges (3) und ein zweites Kammerteil (3) als Träger des formbaren Substrates (5) dienen, und mit einem Substrathalter (16), der das Substrat (5) außerhalb des Prägebereiches fixiert, **dadurch gekennzeichnet, daß**
das Substrat (5) zum Ablösen von dem Prägewerkzeug (3) durch den Substrathalter (16) bei Vergrößerung des Abstandes der beiden Kammerteile (1, 2) an seinem Träger fixiert ist.

2. Einrichtung nach Anspruch 1, **dadurch gekennzeichnet, daß**
der Substrathalter (16) parallel zur Richtung der Verstellung der Kammerteile (1, 2) verschiebbar ist und mit dem Träger des Prägewerkzeuges (3) eine erste Druckkammer (17) einschließt.

3. Einrichtung nach Anspruch 2, **dadurch gekennzeichnet, daß**
der Substrathalter (16) einen Werkzeughalter (8) am Träger des Prägewerkzeuges (3) umschließt, der das Prägewerkzeug (3) auf seiner Umfangsfläche umgreift.

4. Einrichtung nach Anspruch 3, **dadurch gekennzeichnet, daß**
die erste Druckkammer (17) als ringförmige Nut (13) in den Träger des Prägewerkzeuges (3) eingearbeitet ist, die der Substrathalter (16) abschließt.

5. Einrichtung nach Anspruch 4, **dadurch gekennzeichnet, daß**
der Substrathalter (16) durch seine Auflage auf dem Substrat (5) gemeinsam mit dem Werkzeughalter (8) eine zweite Druckkammer (28) begrenzt, in die mindestens ein Kanal (27) für Druckluft durch den Werkzeughalter (8) zur Unterstützung der Ablösung des Substrates (5) von dem Prägewerkzeug (3) beim Öffnen der Kammer geführt ist.

6. Einrichtung nach Anspruch 5, **dadurch gekennzeichnet, daß**
der Träger des Prägewerkzeuges (3) Zufuhrkanäle (18, 25) für Druckluft enthält, von denen ein erster mit der ersten Druckkammer (17) und ein zweiter mit dem Kanal (27) in dem Werkzeughalter (8) verbunden ist.

7. Verfahren zur Trennung eines geformten Substrates (5) von einem Prägewerkzeug (3) innerhalb einer geschlossenen Kammer, die ein Paar gegeneinander verstellbarer Kammerteile (1, 2) enthält, von denen ein erstes Kammerteil (1) als Träger des Prägewerkzeuges (3) und ein zweites Kammerteil (2) als Träger des formbaren Substrates (5) dienen, wobei das Substrat (5) in einem außerhalb eines Prägebereiches liegenden Randbereich an seinem Träger fixiert wird, **dadurch gekennzeichnet, daß** der Abstand der beiden Kammerteile (1, 2) vergrößert wird, währenddessen das Substrat (5) an seinem Träger fixiert bleibt.

8. Verfahren nach Anspruch 7, **dadurch gekennzeichnet, daß**
ein anfänglicher Ablösebereich, der bei der Öffnung der Kammer im fixierten Randbereich entsteht, durch Druckluft und weitere Öffnung der Kammer bis zur vollständigen Trennung des Substrates (5) von dem Prägewerkzeug (3) vergrößert wird.

## Claims

1. Apparatus for separating a formed substrate (5) from a stamping tool (3) including a pair of mutually moveable chamber portions (1, 2) of a closeable chamber, a first chamber portion (1) of which acts as the carrier for the stamping tool (3) and a second chamber portion (3) acts as a carrier for the formable substrate (5), and including a substrate holder (16), which fixes the substrate (5) in position outside the stamping region, **characterised in that** the substrate (5) is fixed to its carrier for release from the stamping tool (3) by the substrate holder (16) when the spacing of the two chamber portions (1, 2) increases.

2. An apparatus as claimed in claim 1, **characterised in that** the substrate holder (16) is moveable parallel to the direction of the movement of the chamber portions (1, 2) and, together with the carrier of the stamping tool (3), encloses a first pressure chamber.

3. An apparatus as claimed in claim 2, **characterised in that** the substrate holder (16) engages around a tool holder (8) on the carrier of the stamping tool (3), which engages around the stamping tool (3) on its peripheral surface.

4. An apparatus as claimed in claim 3, **characterised in that** the first pressure chamber (17) is machined in the form of an annular groove (13) in the carrier of the stamping tool (3), which is closed by the substrate holder (16).

5. An apparatus as claimed in claim 4, **characterised in that** the substrate holder (16) defines, as a result of its engagement with the substrate (5), together with the tool holder (8), a second pressure chamber (28), into which leads at least one passage (27) for compressed air through the tool holder (8) to assist the release of the substrate (5) from the stamping tool, when the chamber is open.

6. Apparatus as claimed in claim 5, **characterised in that** the carrier of the stamping tool (3) includes supply passages (18, 25) for compressed air, a first one of which is connected to the first pressure chamber (17) and a second of which is connected to the passage (27) in the tool holder (8).

7. A method of separating a formed substrate (5) from a stamping tool (3) within a closed chamber, which includes a pair of mutually moveable chamber portions (1, 2), a first chamber portion (1) of which acts as a carrier for the stamping tool (3) and a second chamber portion (2) of which acts as a carrier for the formable substrate (5), the substrate (5) being fixed in position on its carrier in an edge region situated outside of a stamping region, **characterised in that** the spacing of the two chamber portions (1, 2) is increased whilst the substrate (5) remains fixed to its carrier.

8. A method as claimed in claim 7, **characterised in that** an initial release region, which is produced in the fixed edge region when the chamber is opened, is increased by compressed air and further opening of the chamber until the substrate (5) is completely separated from the stamping tool (3).

## Revendications

1. Dispositif pour séparer un substrat (5) matricé d'un outil de matriçage (3) comportant une paire de parties d'une chambre (1,2) pouvant être fermée, déplaçables en face l'une de l'autre, dont une première (1) sert de support à l'outil de matriçage (3) et une seconde (3) sert de support au substrat à matricer (5) et comportant un support de substrat (16) qui fixe le substrat (5) hors de la zone de matriçage **caractérisé en ce que** le substrat (5), pour être séparé de l'outil de matriçage (3) par le support de substrat (16) lorsque l'écart entre les deux parties de chambre (1, 2) s'agrandit, est fixé sur son support.

2. Dispositif selon la revendication 1, **caractérisé en ce que** le support de substrat (16) peut être déplacé parallèlement à la direction de déplacement des parties de chambre (1, 2) et ferme avec le support de l'outil de matriçage (3) une première chambre de pression (17).

3. Dispositif selon la revendication 2, **caractérisé en ce que** le support de substrat (16) comporte un porte-outil (8) sur le support de l'outil de matriçage (3), qui entoure l'outil de matriçage (3) sur sa surface périphérique.

4. Dispositif selon la revendication 3, **caractérisé en ce que** la première chambre de pression (17) est formée en rainure annulaire (13) dans le support de l'outil de matriçage(3), qui ferme le support de substrat (16).

5. Dispositif selon la revendication 4, **caractérisé en ce que** le support de substrat (16) limite, par son appui sur le substrat (5) ensemble avec le porte-outil (8), une seconde chambre de pression (28) dans laquelle au moins un canal (27) pour l'air comprimé est guidé dans le porte-outil (8) pour aider à la séparation du substrat (5) d'avec l'outil de matriçage (3) lorsque la chambre s'ouvre.

6. Dispositif selon la revendication 5, **caractérisé en ce que** le support de l'outil de matriçage (3) comporte des canaux d'alimentation (18, 25) pour l'air comprimé dont un premier est relié à la première chambre de pression (17) et un second au canal (27) dans le porte-outil (8).

7. Procédé de séparation d'un substrat matricé (5) d'avec un outil de matriçage (3) à l'intérieur d'une chambre fermée qui comporte une paire de parties de chambres (1, 2) mobiles en sens inverse l'une de l'autre, dont une première partie de chambre (1) sert de support pour l'outil de matriçage (3)et une seconde partie de chambre (2) sert de support pour le substrat à matricer (5), le substrat (5) étant fixé sur son support dans une zone située en dehors de la zone de matriçage, **caractérisé en ce que** l'écart des deux parties de chambre (1, 2) augmente tandis que le substrat (5) reste fixé à son support.

8. Procédé selon la revendication 7, **caractérisé en ce qu'**une zone de départ de la séparation, qui est créée lors de l'ouverture de la chambre dans la zone de bordure fixée, soit agrandie par l'air comprimé et l'augmentation d'ouverture de la chambre jusqu'à la séparation complète du substrat (5) d'avec l'outil de matriçage (3).
